Europäisches Patentamt

European Patent Office

Office européen des brevets

(19)

(11) Publication number: **0 252 600**
A2

(12) # EUROPEAN PATENT APPLICATION

(21) Application number: **87304901.9**

(22) Date of filing: **03.06.87**

(51) Int. Cl.³: **F 16 D 13/71**

(30) Priority: **09.07.86 FR 8610014**
**16.10.86 GB 8624814**
**23.01.87 GB 8701507**

(43) Date of publication of application:
**13.01.88 Bulletin 88/2**

(84) Designated Contracting States:
**DE ES FR GB IT**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Muller, Patrick**
**4 Avenue du General de Gaulle**
**F-93270 Sevran(FR)**

(72) Inventor: **Curtis, Anthony John**
**8 Fellmore Grove**
**Leamington Spa Warwickshire(GB)**

(72) Inventor: **Barton, Laurence George Herbert**
**15 Pleasant Way**
**Leamington Spa Warwickshire(GB)**

(72) Inventor: **Piazzon, Gianfranco**
**11 Tappinger Grove Knights Meadow**
**Kenilworht Warwickshire(GB)**

(74) Representative: **Kinrade, John**
**Automotive Products plc Patent Department Tachbrook Road**
**Leamington Spa Warwickshire, CV31 3ER(GB)**

(54) Cover assembly for a friction clutch.

(57) The cover assembly comprises a cover 10 with a flange 13, a pressure plate 11 with a pressure surface 20 for pressing friction facings on a driven plate against a counter-pressure plate, a known diaphragm spring urging the pressure plate outwardly of the cover, and known flexible and resilient drive/release straps extending targentially of the pressure plate. To restrict excessive outward movement of the pressure plate 11 from the cover 10 radial lugs 16 are secured to the flange 13 by rivets 17 so that the lugs catch marginal surface portion 21 which is on the pressure plate and is co-planar with the pressure surface 20. Marginal surface 21 may surround the pressure surface 20 or be on respective radial lugs or excressences formed at the outer periphery of the pressure plate. Each lug 16 may be a rivet head integral with the rivet 17. Each lug 16 is in a recess in the flange 13.

FIG. 2.

EP 0 252 600 A2

## COVER ASSEMBLY FOR A FRICTION CLUTCH

This invention relates to cover assemblies for friction clutches.

Typical cover assemblies for friction clutches comprise a cover which is adapted to be connected to a flywheel, a pressure plate mounted coaxially of the cover and drivingly connected thereto in a manner which will permit some axial movement of the pressure plate relative to the cover, and spring means acting between the cover and pressure plate to urge the pressure plate axially away from the cover.

The normal method of locating the pressure plate relative to the cover and providing a driving connection therebetween, is by means of a plurality of symmetrically arranged flexible, resilient drive straps. These drive straps are mounted tangentially between the pressure plate and the cover, one end of each strap being connected to the cover and the other end of the strap being connected to the pressure plate. The symmetrical arrangement of the drive straps holds the pressure plate coaxially of the cover. The flexibility of the drive straps permits some axial movement of the pressure plate relative to the cover, and the resilience of the straps enables them to act as release springs to retract the pressure plate towards the cover during clutch releases.

When the cover assembly is mounted upon a rotatably driven counter pressure member, for example a flywheel, with a driven plate interposed between the flywheel and pressure plate, axial movement of the pressure plate is limited and does not overstress the drive straps. However, prior to assembly, excessive axial movement of the pressure plate outwardly of the cover can overstrain and damage the drive straps so that they can no longer properly retract the pressure plate during attempted clutch releases.

According to the invention, a cover assembly for a friction clutch comprises a cover, a pressure plate connected to said cover by a plurality of flexible and resilient drive/release straps arranged to provide a circumferential drive connection between the cover and the pressure plate and to permit axial movement therebetween, and said pressure plate having a normal pressure surface, characterised in that a plurality of circumferential spaced lugs are rivetted to the cover, in that each lug extends substantially radially into an overlapping relationship with the pressure plate to engage a marginal surface portion of the pressure plate to limit the extent to which the pressure plate may move axially away from the cover, and in that said manginal surface portion is substantially co-planar with the pressure surface and radially outwardly of said pressure surface.

If desired each lug can engage a respective said marginal surface portion on a respective excrescence at the outer periphery of the pressure plate.

In a preferred embodiment at least one of said lugs is integral with the rivet fastening the lug to the cover. For example, the rivet can have a head with an enlarged or off-set portion to form the lug extending at one side of axis of the rivet.

The invention will now be further described, by way of example, with reference to the accompanying drawings, in which:-

Fig.1 is a partial sectional plan view of a fragment of a friction clutch cover assembly formed in accordance with the invention;

Fig.2 is a section on the line II-II in Fig.1;

Fig.3 is a plan view of another pressure plate for use in another embodiment of a friction clutch cover assembly formed according to the invention;

Fig.4 is a section on line IV-IV in Fig.3;

Fig.5 is a section on line V-V in Fig.3;

Fig.6 is a partial sectional plan view of a fragment of a preferred embodiment of a friction clutch cover assembly found according to the invention;

Fig.7 is a section of line VII-VII in Fig.6;

Fig.8 is a plan view of a further preferred embodiment of a friction clutch cover assembly formed according to the invention;

Fig.9 is a section on line IX-IX in Fig.8;

Fig.10 is a fragmentary section (on a larger scale than in Fig.8) on the line X-X in Fig.8, and

Fig.11 is on the same scale as Fig.10 and shows a fragment of an inverse plan view of the pressure plate in Fig.8 engaged by a said lug.

In the drawings like references refer to like or comparable parts.

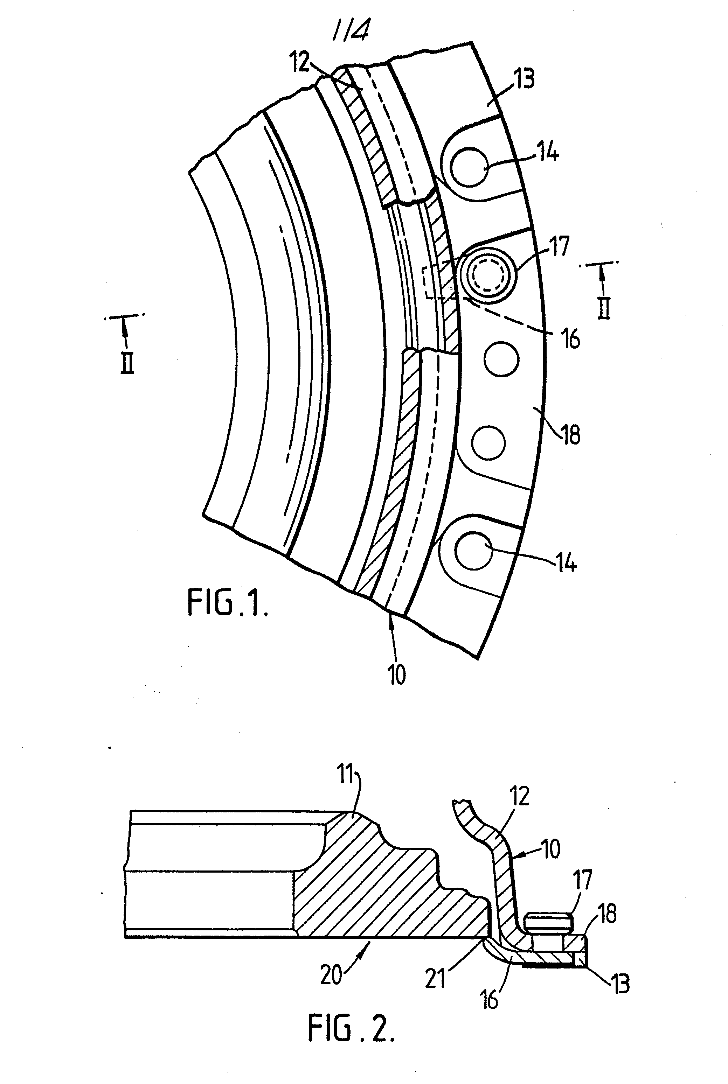

The cover assembly partially illustrated in Figs.1 and 2 includes a cover 10 and a pressure plate 11. The cover 10 comprises a cylindrical wall portion 12 with outwardly directed flange 13 at one end, by means of which the cover 10 may be bolted through a series of circumferentially spaced holes 14 to a rotatably driven counter pressure plate (not shown), for example a fly-wheel of an engine of a motor vehicle. An inwardly directed flange (not shown) is provided at the other end of the wall portion 12.

The pressure plate 11 is mounted within the cover 10 and is connected thereto by means of three flexible and resilient drive and release straps (not shown) known per se. Each strap is secured at its trailing end, relative to the operational direction of rotation of the clutch assembly, tangentially to the pressure plate 11 and its leading end to the cover 10. The drive/release straps may be positioned symmetrically about the circumference of the pressure plate 11 and maintain the pressure plate coaxially of the cylindrical wall 12 of the cover 10.

The drive/release straps permit axial movement of the pressure plate 11 relative to the cover 10. Spring means (not shown) for example a diaphragm spring, acts in a manner known per se between the inwardly directed flange of cover 10 and the pressure plate 11 to urge the pressure plate 11 axially away from the inwardly directed flange of cover 10.

In use the cover assembly described above is mounted upon the rotatably driven counter pressure plate so that the flange 13 abuts the counter pressure plate. A driven plate (not shown) is interposed between the counter pressure plate and the pressure plate 11 and is clamped therebetween under the influence of the spring means acting between the pressure plate 11 and the inwardly directed flange of the cover 10. To release the clutch, the force applied to the pressure plate 11 by the spring means is reduced so that the drive/release straps can retract the pressure plate in a direction away from the counter pressure plate to unclamp the driven plate.

Prior to mounting the cover assembly, on the counter pressure plate, the stiffness of the drive/release straps will normally be sufficient to balance the axial load applied by the spring means acting between the pressure plate 11 and the inwardly directed flange of the cover 10. However, in order to absorb sufficient heat during clutch operation, the pressure plate 11 is of quite substantial mass, and if the cover assembly is subjected to rough handling before it is mounted on the counter pressure plate it is possible that the momentum of the pressure plate will cause the pressure plate to travel excessively outwardly of the cover to overstress and damage the drive/release straps. In order to prevent this, three lugs 16 are secured symmetrically around the flange 13 of the cover 10, by means of rivets 17 which were initially separate from the lug. These lugs 16 extend radially inwardly from the flange 13 so that they overlap the pressure plate 11 and thus form a stop against which the outer peripheral edge of the pressure plate 11 will abut to limit axial movement of

the pressure plate 11 away from/inwardly directed flange of the cover 10.

When the clutch is assembled pressure surface 20 of the pressure plate 11 is intended to engage the driven plate. That surface 20 is radially outwardly extended by a marginal or peripheral portion surface 21 lying beyond and co-planar with that area of the pressure surface which is to contact the driven plate.

Each lug 16 only extends sufficiently to engage said outer marginal surface portion 21 of the pressure surface and is therefore spaced radially outwardly of the outer periphery of the driven plate when the clutch is assembled.

The lugs 16 are positioned beyond the limit of axial movement required to maintain the pressure plate in frictional engagement with the driven plate, over the normal life of the friction linings of the driven plate, so as not to interfere with the clutch operation.

In order to provide sufficient clearance between the flange 13 and the counter pressure plate for the lugs 16 and rivets 17, the flange 13 is deformed axially o f the cover to provide bridge portions 18 to which the lugs 16 are secured; the bridge portions 18 forming recesses in which the lugs 16 are inset. Similar bridge portions are already provided on covers for conventional cover assemblies, for example for the attachment of balance weights. These existing bridge portions or such portions extended as required, may be used for attachment of the lugs 16. The rivets 17 used to attach lugs 16 to the cover 10 may also be used to secure a balance weight to the cover.

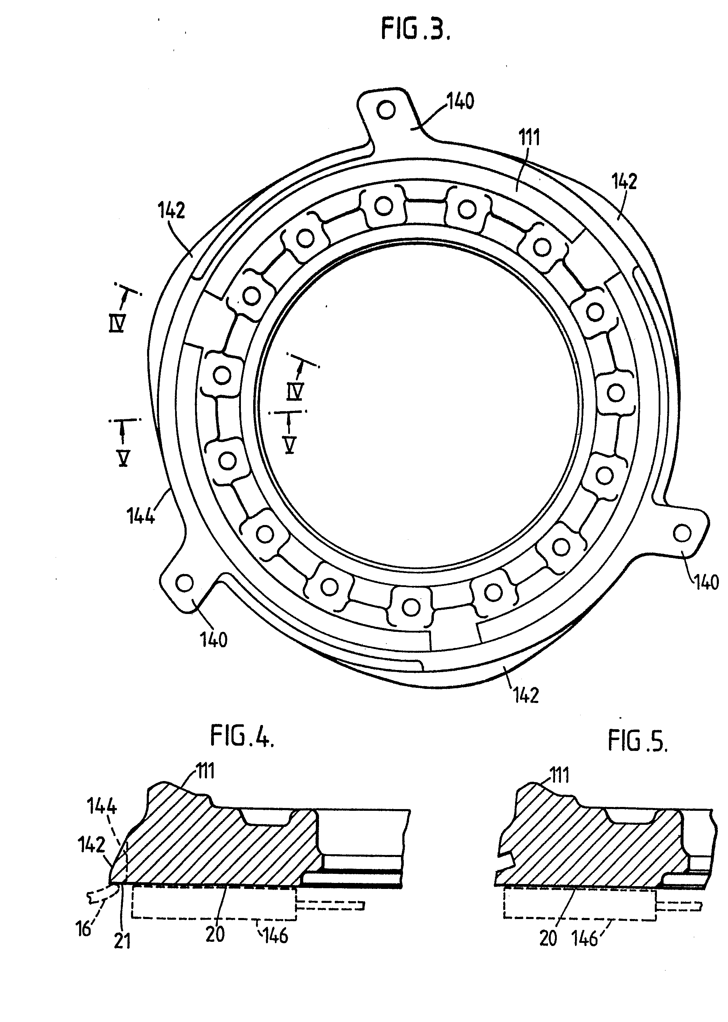

In the embodiment provided with clutch pressure plate 111 in Figs.3 to 5, the pressure plate has lugs 140 for attachment to drive/release straps (not shown). Between the lugs 140, the pressure plate is integrally formed with three substantially equi-angularly spaced radial excrescences or lobes 142 of generally triangular form which over portions of the circumference of the pressure plate provide enlarged marginal surface portions 21 co-planer with and extending radially outwardly beyond the pressure surface 20 of the plate 111. As can be seen in Figs.3 and 4 each lobe 142 extends radially outwardly beyond the basic periphery 144 of the pressure plate, that basic periphery having a diameter substantially equal to the diameter of the outer periphery of the clutch driven plate 146 to be used in the clutch comprising the cover assembly having the pressure plate 111. The lugs 16 (only one shown in Fig.4) disposed and mounted as described with reference to Figs.1 and 2 are each to engage (as shown in Fig.4) the respective marginal portion 21 to limit the axial movement of the pressure plate 111 outwardly of the cover (not shown).

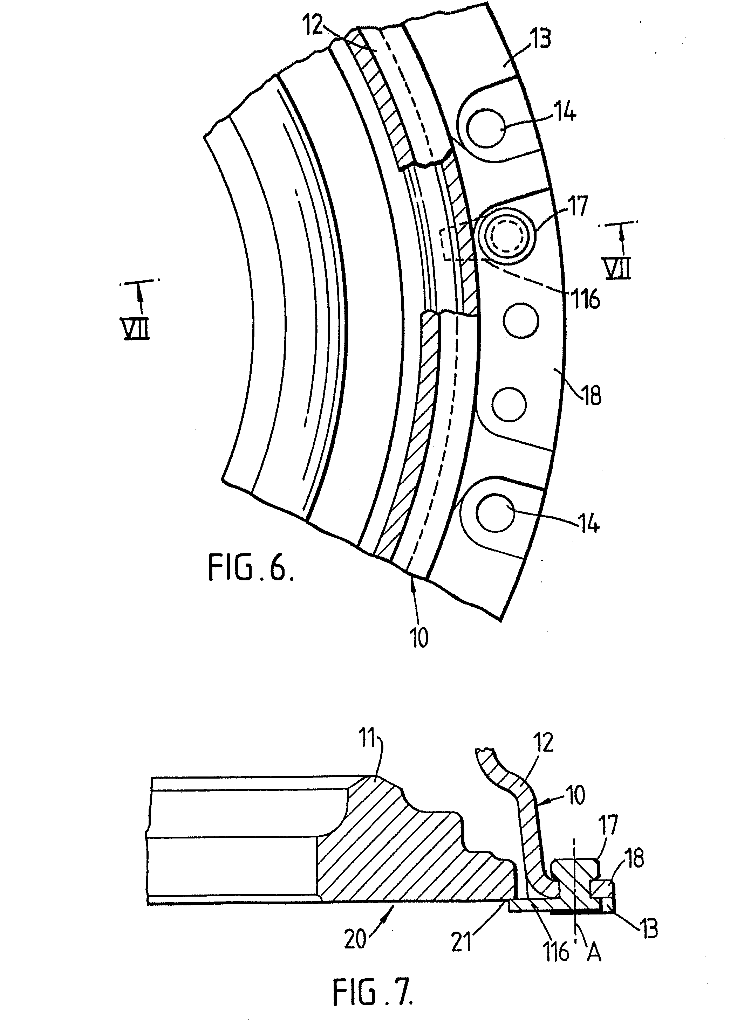

In the embodiment in Figs. 6 and 7 the rivet 17 is integrally formed with a head having an enlarged or off-set portion 116 to one side of the rivet axis A. That portion 116 forms a lug to engage the marginal surface portion 21 of the pressure plate 11.

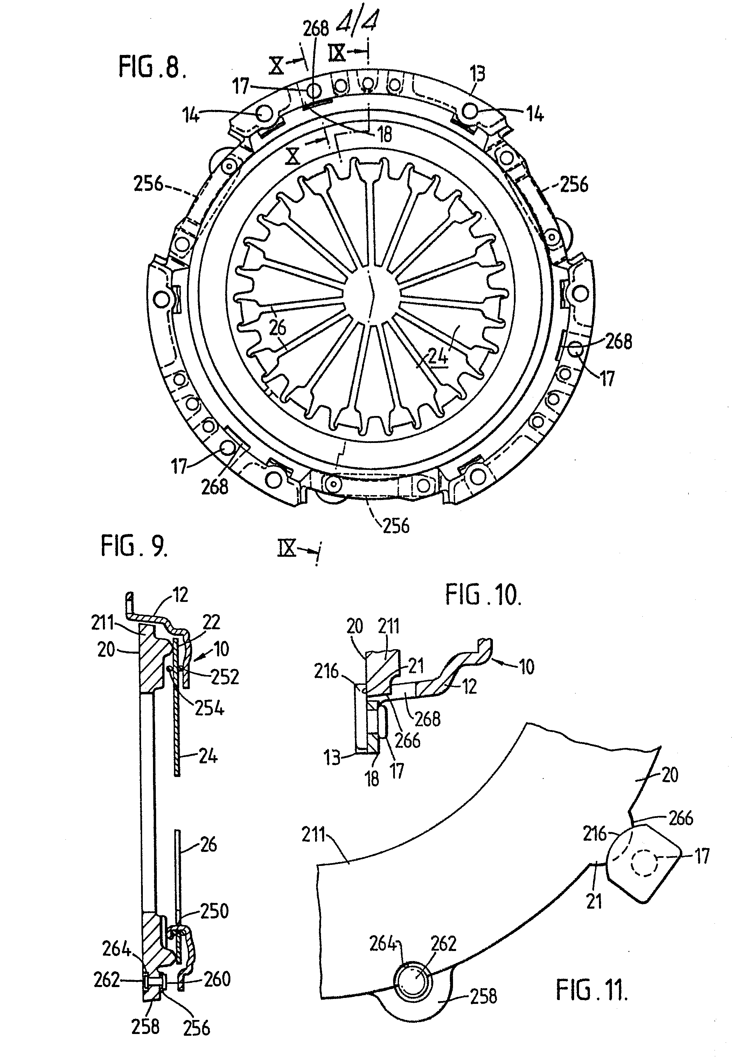

In the embodiment shown in Figs. 8 to 11 a diaphragm spring 22, with release fingers 24 separated by radial slots 26, is shown acting between a pressure plate 211 and the cover 10 which has axially turned tabs 250 extending through the radially outer ends of the slots to locate fulcrum rings 252 and 254. Resilient drive/release straps 256 are each rivetted at one end at 258 to the cover 10 at its other end each drive/release strap is secured to a respective peripheral lug 258 on the pressure plate 211 by a rivet 260 having a head 262 in a recess 264 in the lug.

Three further lugs 266 (only one shown - see Figs. 10 and 11) are substantially equi-angularly spaced apart and are provided at the periphery of the pressure plate 211. Each lug 266 has, in inverse plan view (see Fig.11), a geometrical shape substantially the same as a segment of a circle and provides a respective marginal surface portion 21 co-planar with the pressure surface 20 of the pressure plate 211. Adjacent to each bridge portion 18 the wall portion 12 of the cover is formed with a through window 268 receiving a respective lug 266. Each of the rivets 17 adjacent to a respective lug 266 is integrally formed with a head having an enlarged or off-set portion 216 to one side of the rivet axis. That portion 216 forms a lug to engage the marginal surface portion 21 in the corresponding lug 266. The provision of the windows 268 for the lugs 266 enables the cover 10 to have a somewhat lesser diameter and thus be more compact.

## CLAIMS

1.        A cover assembly for a friction clutch comprising a cover (10), a pressure plate (11; 111; 211) connected to said cover by a plurality of flexible and resilient drive/release straps (256) arranged to provide a circumferential connection between the cover and the pressure plate and to permit axial movement therebetween, and said pressure plate having a normal pressure surface (20), characterised in that a plurality of circumferentially spaced lugs (16; 116; 216) are rivetted (17) to the cover (10), in that each lug extends substantially radially into an overlapping relationship with the pressure plate (11; 111; 211) to engage a marginal surface portion (21) of the pressure plate to limit the extent to which the pressure plate may move axially away from the cover, and in that said marginal surface portion (21) is substantially co-planer with the pressure surface (20) and radially outwardly of said pressure surface (20).

2.        A cover assembly as claimed in Claim 1, characterised in that a said lug (116; 216) is formed by a rivet head integral with a rivet (17) secured to the cover (10).

3.        A cover assembly as claimed in Claim 2, characterised in that said head has an enlarged or off-set portion forming the lug (116; 216) extending to one side of the axis (A) of the rivet (17).

4.        A cover assembly as claimed in any one preceding claim, characterised in that said marginal surface portion (21) extends around the pressure surface (20) on the pressure plate (11).

5.         A cover assembly as claimed in any one of Claims 1 to 3, characterised in that each lug (16; 116; 216) is to engage a respective marginal surface portion (21) on a respective excressesence (142; 266) at the outer periphery of the pressure plate (111; 211).

6.         A cover assembly as claimed in Claim 5, characterised in that a said excressence (142; 266) is separate from a portion of securement (140; 264) of a drive/release strap to the pressure plate (111; 211).

7.         A cover assembly as claimed in Claim 5 or Claim 6, characterised in that each said excressesence (266) is in a respective window (268) in a wall (12) of the cover (10).

8.         A cover assembly as claimed in any one preceding Claim, characterised in that the cover (10) has an outwardly directed flange (13) by means of which it may be secured to a counter pressure plate, said lug (11; 111; 211) being rivetted (17) to the flange.

9.         A cover assembly as claimed in Claim 7 characterised in that the flange (13) is bent to provide bridge portions (18) forming recesses in which are disposed the lugs (16; 116; 216) rivetted (17) to the bridge portions.

10.        A cover assembly as claimed in any one preceding claim, characterised in that a said rivet (17) securing one of the lugs (16; 116; 216) to the cover (10 also serves to secure a balance weight to the cover.

11.        A friction clutch characterised in that said clutch comprises a cover assembly as claimed in any one preceding claim.

0252600

1/4

FIG.1.

FIG.2.

FIG.3.

FIG.4.

FIG.5.

3/4

FIG.6.

FIG.7.

FIG.8.

4/4

FIG.9.

FIG.10.

FIG.11.